# EUROPÄISCHE PATENTSCHRIFT

(11) **EP 3 043 103 B1**
(45) Veröffentlichungstag und Bekanntmachung des Hinweises auf die Patenterteilung: **29.08.2018**
(21) Anmeldenummer: 15003500.4
(22) Anmeldetag: 08.12.2015
(51) Int. Cl.: F16M 11/04, B23Q 1/01, G01D 11/30, F16M 11/18

(54) **TRAVERSE**
TRAVERSE
TRAVERSE

(30) Priorität: 12.01.2015 DE 102015000077
(43) Veröffentlichungstag der Anmeldung: 13.07.2016
(73) Patentinhaber: Fagus-GreCon Greten GmbH & Co. KG, 31061 Alfeld (DE)
(72) Erfinder: Tmimi, Farid, 58566 Kierspe (DE)
(74) Vertreter: Rieke, Andreas

(56) Entgegenhaltungen:
- EP-A1- 1 344 600
- CN-A- 1 759 347
- DE-A1- 19 833 125
- DE-A1-102004 047 525
- DE-A1-102013 007 654
- DE-A1-102013 102 564
- DE-U1- 29 705 152

## Beschreibung

Die Erfindung betrifft eine zwischen zwei Standfüßen, Wänden oder dergleichen gefangene Traverse, insbesondere als Träger von Sensoren für das Vermessen und/oder Prüfen eines quer zu der Längserstreckung, ober- oder unterhalb der Traverse vorbeibewegten Gegenstands.

Derartige Traversen sind in vielfältigen Ausführungsformen bekannt und bewährt.

Vielfach bilden sie ein Portal mit aus, durch das Gegenstände beispielsweise auf einem Förderband transportiert werden. Mit entsprechenden Sensoren versehen, können so z.B. Gepäckstücke für eine Kontrolle durchleuchtet werden. Andere sensorbestückte Traversen dienen dem Sortieren von unterschiedlichen Gegenständen, der Prüfung der Oberflächenbeschaffenheit solcher Gegenstände oder deren Struktur, was sowohl kontinuierlich als auch diskontinuierlich erfolgen kann.

Häufig finden sich auch Traversenanordnungen mit zwei übereinander angeordneten Traversen, zwischen denen Gegenstände in eine Richtung transportiert werden. Zumeist wird dann eine der Traversen einen ein Signal aussendenden Sensor tragen und die andere einen das durch den Gegenstand geänderte Signal empfangenden Sensor.

Solche Traversenanordnungen finden sich bspw. am Ende einer Fabrikationsstraße für endlos hergestellte Halbzeuge aus Holzwerkstoffen, Kunststoffen oder dergleichen zur Qualitätssicherung. Dabei werden regelmäßig Dickenmessungen vorgenommen wie auch eine Kontrolle der Oberflächenbeschaffenheit und dergleichen mehr. Bei dem hohen Ausstoß moderner Fertigungsstraßen und Breiten der Traversen von mehr als 3 m sowie hohen Temperaturen der Halbzeuge von über 100°C, beispielsweise von etwa 120°C bei Holzwerkstoffen und etwa 180°C und mehr bei Kunststoffen, die darüber hinaus noch bei dem Austritt aus der Fertigungsstraße ausgasen, verfälschen zunehmend auftretende mechanische Schwingungen und thermische Verspannungen die Genauigkeit der Messergebnisse. Aber selbst bei den genannten Abmessungen der Traversenanordnung werden beispielsweise Dickenmessungen verlangt, die auf 1/100 mm genau sind. Dies können bekannte Traversenanordnungen aufgrund der genannten Probleme vielfach nicht leisten.

Vor diesem technischen Hintergrund macht die Erfindung es sich zur Aufgabe, eine Traverse zur Verfügung zu stellen, die insbesondere als Träger von Sensoren eine große mechanische wie auch thermische Stabilität aufweist und so eine hohe Genauigkeit von Messungen gewährleistet. Darüber hinaus soll die Traverse konstruktiv einfach und leicht sein, bspw. auch für einen mobilen Einsatz.

Gelöst wird diese technische Problematik bei einer zwischen zwei Standfüßen, Wänden oder dergleichen gefangene Traverse, insbesondere als Träger von Sensoren für das Vermessen und/oder Prüfen eines quer zu der Längserstreckung, ober- oder unterhalb der Traverse vorbeibewegten Gegenstands, gem. des Anspruchs 1 durch die Merkmale, dass die Traverse durch von Spanten gehaltene Carbonstäbe oder Carbonrohre ausgebildet ist.

Für das tragende Gerüst der Traverse nach der Erfindung finden Stäbe oder Rohre aus Corbon, manchmal auch Karbon, einem Verbundwerkstoff, Verwendung, bei dem Kohlenstofffasern in Kunststoff eingebettet sind, vielfach mit der Abkürzung CFK bezeichnet. Solche Werkstücke aus CFK weisen eine hohe Steifigkeit bei einem geringen Gewicht auf. Hinzukommt ein ausgesprochen geringer Wärmeausdehnungskoeffizient, der in der Größenordnung von 10⁻⁷ K⁻¹ liegt. Temperatureinflüsse haben damit nur geringe Auswirkungen auf die Abmessungen der Traverse und damit einhergehend auf eine exakte Positionierung von Sensoren.

Die Carbonstäbe oder Carbonrohre werden voneinander beabstandet von Spanten gehalten. Damit sind die Carbonstäbe oder Carbonrohre gegeneinander positioniert und festgelegt.

Die Anordnung der Carbonstäbe oder Carbonrohre über den Querschnitt der Traverse ist weitgehend freibleibend. Bevorzugt wird aus Symmetriegründen ein regelmäßiger Polygonzug. Eine ausgeglichene Gewichtsverteilung wird so erhalten.

Zweckmäßigerweise werden mehr als zwei Carbonstäbe oder Carbonrohre Verwendung finden, bei einer bevorzugten Ausführungsform der Traverse nach der Erfindung sind es drei. Es ist dann zweckmäßig, dass in einem Querschnitt die drei Carbonrohre oder Carbonstäbe in einem Dreieck angeordnet sind, wobei zwei der Carbonstäbe oder Carbonrohre in einer dem Gegenstand zugewandten, horizontal sich erstreckenden Ebene angeordnet sind und dass der dritte Carbonstab oder das dritte Carbonrohr eine von dem Gegenstand fortweisende Spitze des Dreiecks ausbildet.

Durch die beiden Carbonstäbe oder Carbonrohre wird dann eine horizontale Plattform ausgebildet, die in zweckmäßiger Weise Sensoren tragen kann. Hin zu dem dritten Carbonstab oder Carbonrohr ist für den Sensor ausreichend Platz. Damit erfolgt ein Erfassen eines vorbeigeführten Gegenstandes von dem Sensor zwischen den beiden Carbonstäben oder Carbonrohren hindurch, die in der horizontalen Ebene angeordnet sind. Von Vorteil einer derartigen Ausgestaltung ist weiter, dass die Sensoren an den Carbonstäben oder Carbonrohren frei verschiebbar sind. Besondere Halterungen, Aussparungen oder dergleichen für das Anbringen der Sensoren sind damit nicht von Nöten. Ferner ist ein leichter Austausch der Sensoren möglich wie auch eine schnelle und problemlose Ergänzung durch weitere Sensoren.

Ein weiterer Vorteil dieser Bauweise liegt darin, dass die Traverse in ihrer Längserstreckung segmentiert und modular ausgebildet ist. So ist es möglich, endseitige Module oder Segmente für den Anschluss an beispielsweise Standfüße oder dergleichen vorzuhalten. Zwischen diesen können weitere, untereinander gleichartige Module, aber auch verschiedener Längen eingesetzt werden. So lassen sich sehr schnell, gleichsam aus einem Baukasten, Traversen unterschiedlichster Länge erstellen.

Für das Verbinden der Segmente untereinander ist vorgesehen, dass diese wenigstens einseitig von einem Spant abgeschlossen werden und dass die Spanten aneinander anschließender Segmente passgenau und verdrehsicher verbindbar sind, beispielsweise durch Passstifte.

Die Traverse nach der Erfindung ist äußerst leicht. Eine vergleichsweise einfache Seilaufhängung bzw. Verspannung ist deshalb möglich, die beispielsweise Verwindungen oder dergleichen von Standfüßen entgegenwirkt. Hierzu ist weiter vorgesehen, dass endseitig der Traverse Spanten vorgesehen sind, dass den Spanten Ansätze nach außen vorstehen und dass an den Ansätzen eine Seilaufhängung angreift. Diese wird in aller Regel vertikal ausgeführt werden.

Häufig besteht der Wunsch, dass ein Sensor an einer Traverse quer zur Transportrichtung eines abzutastenden Gegenstandes verfahren werden kann. Bei der Traverse nach der Erfindung bietet es sich an, dass aufeinander abfolgende Spanten mit jeweils einer zu dem Gegenstand hin offenen Ausnehmung versehen sind und dass in den Ausnehmungen eine Linearführung für ein Verfahren eines den Gegenstand abtastenden Sensors angeordnet ist. Für das mechanische Stellen des Sensors entlang einer solchen Linearführung bieten sich bekannten Techniken an.

Um die Sensoren vor einer Verschmutzung zu schützen kann ein Gehäuse vorgesehen sein, dessen Inneres mit einem unter Überdruck stehenden Spülgas beaufschlagbar ist.

Für die Ausbildung einer Traversenanordnung der eingangs erläuterten Art, bei der zwei Traversen übereinander angeordnet sind, bietet es sich weiter an, dass die Traversen nach der Erfindung endseitig von jeweils einem Verbindungselement aus Carbon beabstandet gehalten sind. Es ist damit ein Rahmen geschaffen, der mechanisch sehr stabil und verwindungssteif ist. Da er darüber hinaus äußerst leicht ist, bietet sich ein derartiger Rahmen auch für einen mobilen Einsatz an, beispielsweise für die Überprüfung von Förderbändern, Ketten oder dergleichen, die dann zwischen den beiden mit Sensoren bestückten Traversen durchlaufen.

Zweckmäßigerweise ist für die Verbindungselemente vorgesehen, dass diese zwischen zwei Deckeln gefasst und mittels Gewindestangen vorgespannt sind und dass auf den Deckeln die zwei in der horizontalen Ebene angeordneten Carbonstäbe oder Carbonrohre festgelegt sind. Dies kann entsprechend den Sensoren beispielsweise durch Klammern erfolgen.

Die Vorspannung wirkt sich weiter dahingehend aus, dass durch Temperaturdifferenzen kaum Längenänderungen auftreten. Bei der Verwendung von CFK-Rohren als Verbindungselemente können ferner die Gewindestäbe innerhalb der Rohre angeordnet werden, mithin sicher vor einer mechanischen Beschädigung oder dergleichen.

Die Erfindung wird anhand der Zeichnung näher erläutert, in der lediglich ein Ausführungsbeispiel schematisch dargestellt ist. In der Zeichnung zeigt:
- Fig. 1:: eine Frontansicht einer Vorrichtung für ein Vermessen beispielsweise eines zwischen zwei Traversen hindurchgeführten Halbzeuges,
- Fig. 2:: eine isometrische Darstellung der Vorrichtung nach Figur 1,
- Fig. 3:: eine Ansicht gemäß Figur 1 mit abgenommener Verkleidung,
- Fig. 4:: eine Traversenanordnung mit zwei übereinander angeordneten Traversen,
- Fig. 5:: die Traversenanordnung nach Figur 4 in einer Frontansicht,
- Fig. 6:: die Traverse in einer Seitenansicht,
- Fig. 7:: eine Draufsicht auf die Traverse gemäß Figur 5,
- Fig. 8:: ein endseitiges Segment in einer Seitenansicht,
- Fig. 9:: das Segment nach Figur 8 in einer Draufsicht,
- Fig. 10:: einen ersten Spant,
- Fig. 11:: einen zweiten Spant,
- Fig. 12:: eine isometrische Darstellung des Segments,
- Fig. 13:: eine isometrische Darstellung eines Verbindungselements,
- Fig. 14:: eine Seitenansicht,
- Fig. 15:: eine Draufsicht,
- Fig. 16.: ein weiteres Ausführungsbeispiel einer Traversenanordnung,
- Fig. 17:: eine Seitenansicht der Traversenanordnung gemäß Figur 16,
- Fig. 18:: eine Draufsicht,
- Fig. 19:: eine vergrößerte Darstellung eines Spants einer Traversenanordnung gemäß Figur 16 und
- Fig. 20:: eine isometrische Darstellung dieser Traversenanordnung.

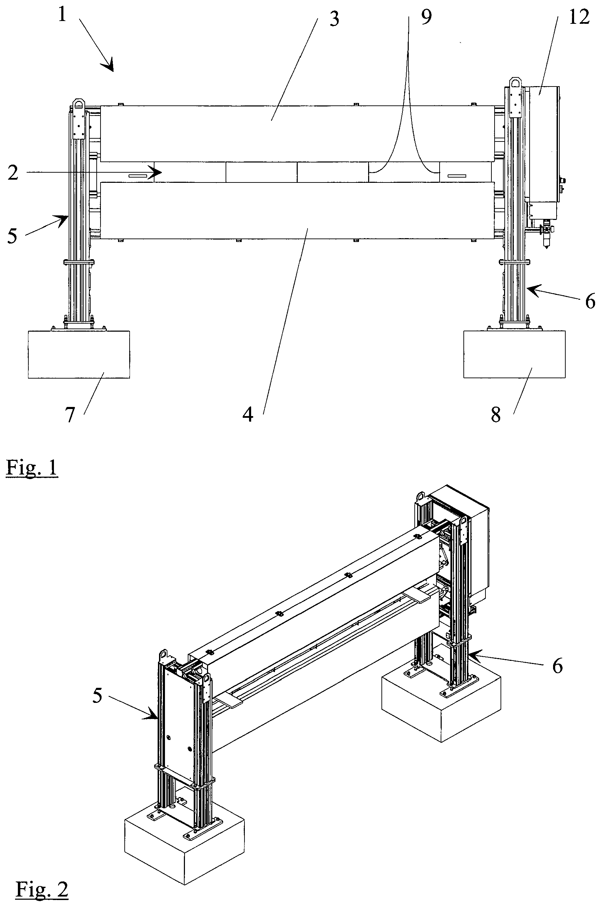

Die Figuren 1 und 2 zeigen eine typische Vorrichtung 1 für das Vermessen und/oder Prüfen von beispielsweise Halbzeugen, die in Figur 1 senkrecht zur Zeichenebene durch einen Spalt 2 zwischen zwei Traversen verkleidenden Gehäusen 3,4 hindurchgeführt werden. Bei dem Ausführungsbeispiel sind diese Traversen zwischen zwei Paaren von Standfüßen 5,6 gefangen, die mechanisch stabil auf entsprechenden Fundamenten 7,8 ruhen. Anstelle der Fundamente 7,8 können geeignet ausgebildete Füße auch Verwendung finden, so dass die Vorrichtung 1 durchaus auch mobil betrieben werden kann.

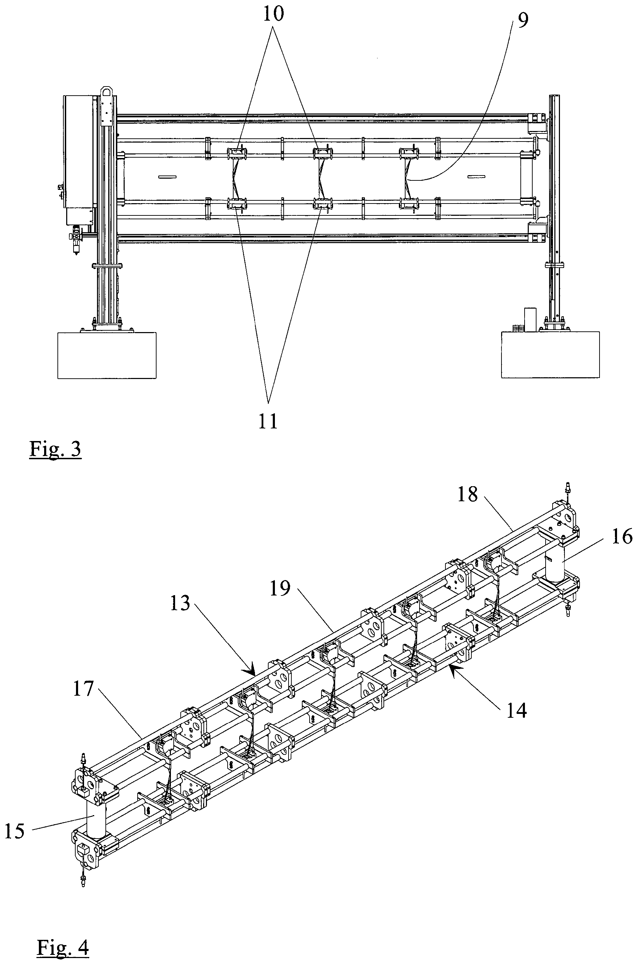

Die Figur 1 zeigt den Strahlengang 9 von hier beispielhaft fünf Sensoren oder Sensoranordnungen 10,11, vergleiche Figur 3.

Für die Verschaltung der Sensoren 10,11 ist ein Schaltkasten 12 noch vorgesehen. Die halbschalig ausgebildeten Gehäuse 3,4 erlauben es, das Innere mit einem unter Überdruck stehenden Spülgas wie Luft zu beaufschlagen, womit die Sensoren 10,11 weitgehend vor einer Verschmutzung sicher sind.

Die Sensoren 10,11 sind an zwei Traversen 13,14 gemäß Figur 4 festgelegt. Die Traversen 13,14 werden von Verbindungselementen 15,16 beabstandet gehalten, die vorzugsweise durch CFK-Rohre ausgebildet werden. Damit bilden die Traversen 13,14 und die Verbindungselemente 15,16 einen mechanisch steifen Rahmen aus.

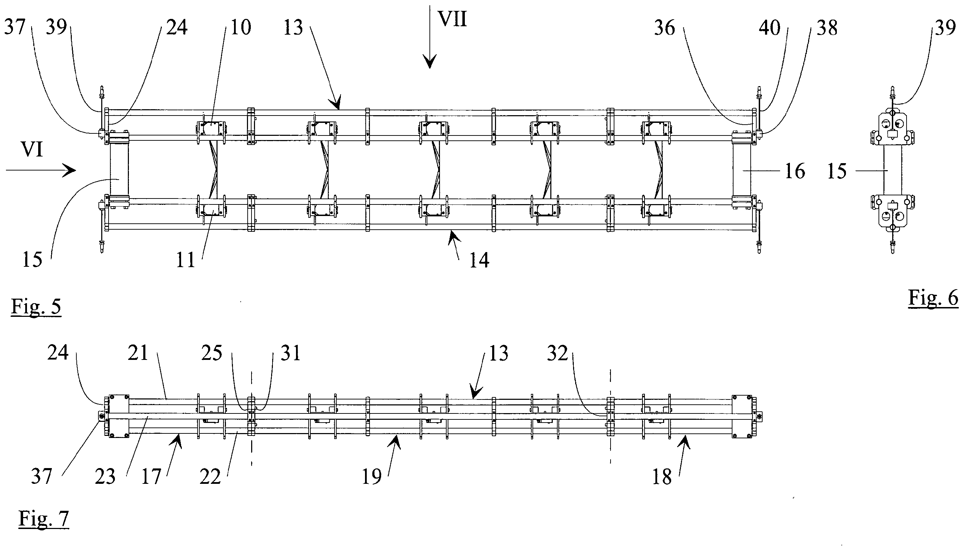

Die Traversen 13,14 sind gleichartig aufgebaut. Figur 7 zeigt die Traverse 13 in einer Draufsicht. Diese Ansicht lässt aufgrund der strichpunktierten Linien leicht die Segmentierung der Traverse 13 in drei Segmente erkennen. Zwei Endsegmente 17,18 sind gleichartig ausgebildet. Von den Endsegmenten 17,18 wird ein Mittelsegment 19 hier beispielsweise eingefasst. Weitere Zwischensegmente oder Segmente anderer Länge sind durchaus möglich, so dass ein modulartiger Aufbau der Traversen 13,14 ermöglicht ist.

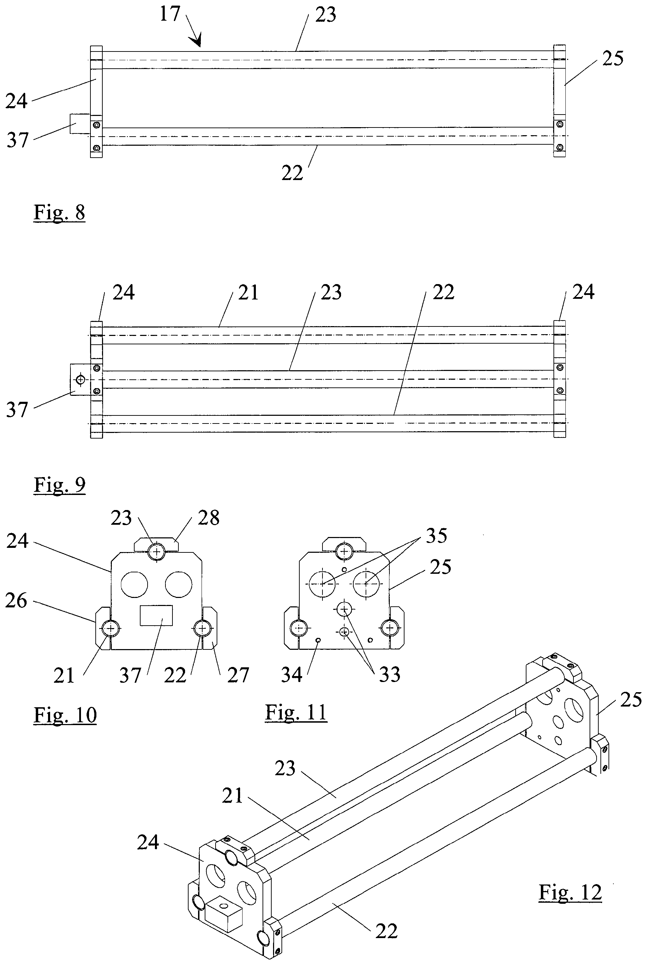

Anhand der Figuren 8 bis 12 wird der Aufbau eines Endsegments 17 und damit der Aufbau der Traversen 13,14 insgesamt weiter erläutert. Die Figuren 8 bis 12 zeigen auf, dass drei Carbonrohre 21-23 das Segment 17 ausbilden, die endseitig von Spanten 24,25 gehalten sind.

Bei diesem Ausführungsbeispiel sind die Carbonrohre 21-23 in Ausrundungen der Spanten 24,25 von mit entsprechenden Ausrundungen versehenen Schellen 26-28 gehalten, die mit den Stirnflächen der Spanten 25 verschraubt sind. Hieraus ergibt sich der Vorteil, dass einzelne Carbonrohre 21-23 unabhängig voneinander und unabhängig von den Carbonrohren weiterer Segmente ausgetauscht werden können.

Hier ist eine Anordnung der Carbonrohre 21-23 derart gewählt, dass die Carbonrohre 21,22 in einer horizontalen Ebene liegen, die einem zwischen den Traversen 13,14 hindurch geführten Gegenstand zugewandt ist. Das dritte Carbonrohr bildet eine von einem durch den Spalt 2 geführten Gegenstand fortweisende Spitze eines Dreiecks aus. Hierdurch wird ausreichend Raum zwischen den horizontal angeordneten Carbonrohren 21,22 sowie dem bei dem Endsegment 17 darüber liegenden dritten Carbonrohr 23 geschaffen, in dem die Sensoren 10 angeordnet sind. Diese können in vorteilhafter Weise auf den horizontal sich erstreckenden Carbonrohren 21,22 über deren Länge frei positionierbar mit Schellen, vergleichbar den Carbonrohren 21-23 an den Spanten 24,25, festgelegt werden.

Wie die Endsegmente 17,18 weist auch das Mittelsegment 19 endseitig Spanten 31,32 auf, vergleiche Figur 7. Einen exakten Anschluss des endseitigen Spants 25 des Endsegments 17 an den ebenfalls endseitigen Spant 31 des Mittelsegments 19 sichern korrespondierende Zentrierstifte und Zentrierbohrungen 33. Die Auszugssicherheit wird durch eine Verschraubung der Spanten 25,31 erreicht, hier angedeutet durch drei Bohrungen 34. Letztlich erlauben korrespondierende Durchbrechungen 35 in den Spanten 25,31 die Durchführung der Kabel für eine Verschaltung der Sensoren 10.

Eine entsprechende Anbindung ist zwischen dem Mittelsegment 19 und dem zweiten Endsegment 18 vorgesehen.

Den äußeren Spanten 24,36 der Endsegmente 17,18 steht nach außen jeweils ein Ansatz 37,38 vor. An diesen Ansätzen 37,38 greift jeweils eine Seilverspannung 39,40, hier vertikal nach oben, an. Entsprechendes gilt für die untere Traverse 14, bei der eine Verspannung nach unten erfolgt.

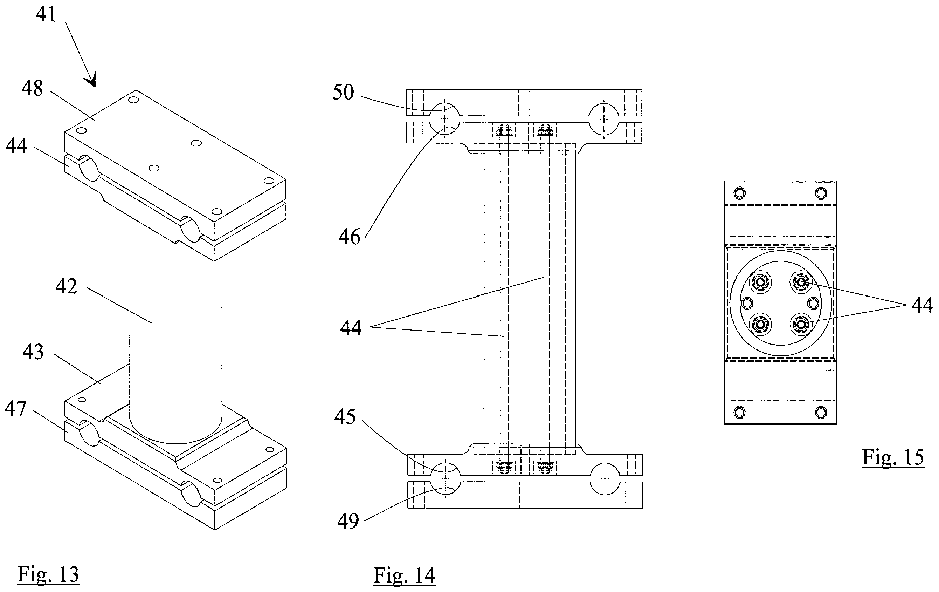

Anhand der Figuren 13-15 wird ein Verbindungselement 41 der Traversen 13,14 weiter erläutert. Für dessen Ausbildung werden die Stirnseiten eines CFK-Rohrs 42 in Sackbohrungen zweier Deckel 43,44 gefasst, die von vier Gewindestäben 44 verspannt sind. Die Deckel 43,44 weisen halbkreisförmige Nuten 45,46 auf, die der Aufnahme der in einer Ebene angeordneten Carbonrohre der beiden Traversen 13,14 dienen, vergleiche Figur 4. Entsprechend den Deckeln 42,43 sind Kopfplatten 47,48 mit Nuten 49,50 ausgebildet, so dass die Carbonrohre vollständig eingefasst sind, wenn die Kopfplatten 47,48 mit den Deckeln 43,44 verschraubt werden.

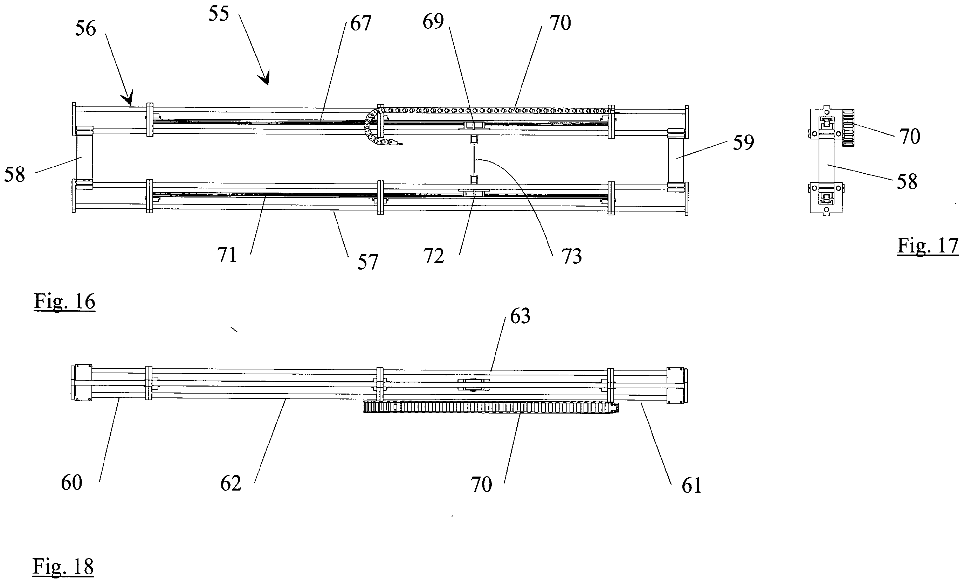

Anhand der Figuren 16-20 wird ein weiteres Ausführungsbeispiel einer Traversenanordnung 55 mit zwei übereinanderliegenden Traversen 56,57 erläutert, die von zwei Verbindungselementen 58,59 beabstandet gehalten sind.

Jede Traverse 56 besteht wieder aus zwei Endsegmenten 60,61, die gleichartig ausgebildet sind und hier zwei Mittelsegmente 62,63 einfassen.

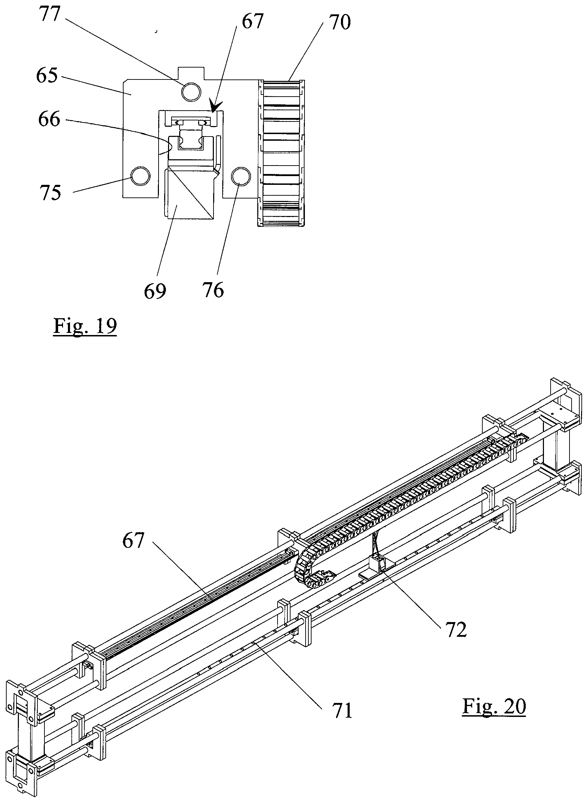

Die Spanten 65 der Mittelsegmente 62,63 weisen in der Draufsicht gemäß Figur 19 eine U-förmige Ausbildung auf, durch die eine Ausnehmung 66 geschaffen wird, die zu dem zwischen den Traversen 56,57 hindurchgeführten Gegenstand offen ist.

Da auch die dem Spant 65 benachbarten Spanten der Mittelsegmente 62,63 mit derartigen Ausnehmungen 66 versehen sind, ist es ermöglicht, über die gesamte Länge der Mittelsegmente 62,63 in die Ausnehmungen 66 eine Linearführung 67 einzubringen, an der ein Sensor 69 mittels einer angedeuteten Energie-Gliederkette 70 quer zur Transportrichtung eines Gegenstandes verfahrbar ist.

Bei dem Ausführungsbeispiel weist auch die gemäß Figur 16 untere Traverse 57 eine derartige Linearführung 71 auf, an der entsprechend dem Sensor 69 ein weiterer Sensor 72, beispielsweise ein Empfänger für eine von dem Sensor 69 ausgesandte Strahlung 73.

Zweckmäßigerweise weisen auch die Endsegmente 60,61 Spanten gemäß Figur 19 auf. Solches ist zum einen kostengünstig und können durch diese Ausnehmungen 66 beispielsweise Kabel problemlos verlegt werden.

Darüber hinaus zeigt Figur 19, dass bei diesem Ausführungsbeispiel drei Carbonrohre 75,76,77 in einer Dreiecksanordnung, wie voranstehend beschrieben, in Bohrungen der Spanten 65 fixiert sind.

**Bezugszeichenliste:**

| | | | |
|---|---|---|---|
| 1. | Vorrichtung | 27. | Schelle |
| 2. | Spalt | 28. | Schelle |
| 3. | Gehäuse | 29. | |
| 4. | Gehäuse | 30. | |
| 5. | Paar von Standfüßen | 31. | Spant |
| 6. | Paar von Standfüßen | 32. | Spant |
| 7. | Fundament | 33. | Zentrierstift, Zentrierbohrung |
| 8. | Fundament | | |
| 9. | Strahlengang | 34. | Bohrung |
| 10. | Sensor | 35. | Durchbrechung |
| 11. | Sensor | 36. | Spant |
| 12. | Schaltkasten | 37. | Ansatz |
| 13. | Traverse | 38. | Ansatz |
| 14. | Traverse | 39. | Seilverspannung |
| 15. | Verbindungselement | 40. | Seilverspannung |
| 16. | Verbindungselement | 41. | Verbindungselement |
| 17. | Endsegment | 42. | Deckel |
| 18. | Endsegment | 43. | Deckel |
| 19. | Mittelsegment | 44. | Gewindestab |
| 20. | | 45. | Nut |
| 21. | Carbonrohr | 46. | Nut |
| 22. | Carbonrohr | 47. | Kopfplatte |
| 23. | Carbonrohr | 48. | Kopfplatte |
| 24. | Spant | 49. | Nut |
| 25. | Spant | 50. | Nut |
| 26. | Schelle | 51. | |
| 52. | | | |
| 53. | | | |
| 54. | | | |
| 55. | Traversenanordnung | | |
| 56. | Traverse | | |
| 57. | Traverse | | |
| 58. | Verbindungselement | | |
| 59. | Verbindungselement | | |
| 60. | Endsegment | | |
| 61. | Endsegment | | |
| 62. | Mittelsegment | | |
| 63. | Mittelsegment | | |
| 64. | | | |
| 65. | Spant | | |
| 66. | Ausnehmung | | |
| 67. | Linearführung | | |
| 68. | | | |
| 69. | Sensor | | |
| 70. | Gliederkette | | |
| 71. | Linearführung | | |
| 72. | Sensor | | |
| 73. | Strahlung | | |
| 74. | | | |
| 75. | Carbonrohr | | |
| 76. | Carbonrohr | | |
| 77. | Carbonrohr | | |

## Patentansprüche

1. Zwischen zwei Standfüßen, Wänden oder dergleichen festgelegte Traverse als Träger von Sensoren für das Vermessen und/oder Prüfen eines quer zu der Längserstreckung, ober- oder unterhalb der Traverse vorbeibewegten Gegenstands, wobei sich längs der Traverse (13,14) erstreckende Carbonstäbe oder Carbonrohre (21-23) durch Spanten (24,25) gehaltene sind, die sich quer zu den Carbonstäben oder Carbonrohren (21-23) erstrecken und die jeweils die Carbonstäbe oder Carbonrohre (21-23) gegeneinander positionieren und festlegen, **dadurch gekennzeichnet, dass** die Traverse (13, 14) in ihrer Längserstreckung segmentiert und modular ausgebildet ist, dass die Segmente (17-19) wenigstens einseitig von einem Spant (24,25;31,32) abgeschlossen werden und dass die Spanten (25,31) aneinander anschließender Segmente (17, 19) passgenau und verdrehsicher verbindbar sind.

2. Traverse nach Anspruch 1, **dadurch gekennzeichnet, dass** in einem Querschnitt die Mittelpunkte der Carbonstäbe oder Carbonrohre ein regelmäßiges Polygon aufspannen.

3. Traverse nach Anspruch 2, **dadurch gekennzeichnet, dass** drei in einem Dreieck angeordnete Carbonrohre (21-23) oder Carbonstäbe vorgesehen sind, dass zwei der Carbonstäbe (21,22) oder Carbonrohre in einer dem Gegenstand zugewandten, horizontal sich erstreckenden Ebene angeordnet sind und dass der dritte Carbonstab oder das dritte Carbonrohr (23) eine von dem Gegenstand fort weisende Spitze des Dreiecks ausbildet oder umgekehrt.

4. Traverse nach einem oder mehreren der vorangehenden Ansprüche, **dadurch gekennzeichnet, dass** endseitig Spanten (24, 36) vorgesehen sind, dass den Spanten (24,36) Ansätze (37, 38) nach Außen vorstehen und dass an den Ansätzen (37, 38) eine Seilverspannung (39,40) angreift.

5. Traverse nach einem oder mehreren der vorangehenden Ansprüche, **dadurch gekennzeichnet, dass** aufeinander abfolge Spanten (65) jeweils mit einer zu dem Gegenstand hin offenen Ausnehmung (66) versehen sind und dass in den Ausnehmungen (66) eine Linearführung (67) für ein Verfahren eines den Gegenstand abtastenden Sensors (69) angeordnet ist.

6. Traverse nach einem oder mehreren der vorangehenden Ansprüche, **gekennzeichnet durch** ein Gehäuse (3), dessen Inneres mit einem unter Überdruck stehenden Spülgas beaufschlagbar ist.

7. Traversenanordnung, aufweisend zwei übereinander angeordnete Traversen nach einem oder mehreren der vorangehenden Ansprüche, **dadurch gekennzeichnet, dass** die Traversen endseitig von jeweils einem Verbindungselement aus Carbon beabstandet gehalten sind.

8. Traversenanordnung nach Anspruch 7, **dadurch gekennzeichnet, dass** die Verbindungselemente zwischen zwei Deckeln gefasst und mittels Gewindestangen vorgespannt sind und dass auf den Deckeln die zwei in der horizontalen Ebene angeordneten Carbonstäbe oder Carbonrohre festgelegt sind.

## Claims

1. Cross beam, fixed between two stands or suchlike, as a support for sensors for measuring and/or examining an object moved past above or below the cross beam at right angles to the longitudinal direction, wherein
carbon rods or carbon pipes (21-23) extending along the cross beam (13, 14) are held by frames (24, 25) which extend perpendicularly to the carbon rods or carbon pipes (21-23) and which each position and fix in place the carbon rods or carbon pipes (21-23) with regard to each other, **characterised in that**
in its longitudinal direction the cross beam (13, 14) is segmented and modular in design, **in that** the segments are closed by a frame (24, 25; 31, 32) on one side and **in that** segments (17, 19) adjoining each other can be connected to each other with a precise fit and protected against rotation.

2. Cross beam according to claim 1 **characterised in that** in cross-section the midpoints of the carbon rods or carbon pipes form a regular polygon.

3. Cross beam according to claim 2 **characterised in that** three carbon pipes (21-23) or carbon rods are arranged in a triangle, **in that** two of the carbon rods (21, 22) or carbon pipes are arranged in a horizontally extending plane facing the object, and **in that** the third carbon rod or the third carbon pipe (23) forms an apex of the triangle pointing away from the object or vice-versa.

4. Cross beam according to one or more of the preceding claims **characterised in that** end-side frames (24, 36) are provided, **in that** projections (27, 38) protrude outward from the frames (24, 36) and **in that** cable bracing (39, 40) is attached to the projection (37, 38) .

5. Cross beam according to one of more of the preceding claims **characterised in that** successive frames (65) are each provided with a recess (66) open towards the object and **in that** arranged in the recesses (66) is a linear guide (67) for displacing a sensor (69) scanning the object.

6. Cross beam according to one or more of the preceding claims **characterised by** a housing (3) to the interior of which a pressurised purge gas can be applied.

7. Cross beam device comprising two cross beams arranged above one another according to one or more of the preceding claims, **characterised in that** at the ends the cross beams are each held at a distance by a connecting element made of carbon.

8. Cross beam device according to claim 7 **characterised in that** the connecting elements are held between two covers and tensioned by way of threaded rods and **in that** the two carbon rods or carbon pipes arranged in the horizontal plane are fixed on the covers.

## Revendications

1. Traverse posée entre deux pieds, parois ou similaires et servant de support de capteurs pour la mesure et/ou le contrôle d'un objet passant transversalement à l'extension longitudinale au-dessus ou en-dessous de la traverse,
des barreaux en carbone ou des tubes en carbone (21-23) s'étendant le long de la traverse (13,14) étant tenus par des membrures (24,45) qui s'étendent transversalement aux barreaux en carbone ou aux tubes en carbone (21-23) et qui positionnent et fixent respectivement l'un contre l'autre les barreaux en carbone ou tubes en carbone (21-23), **caractérisée en ce que**
la traverse (13,14) est segmentée dans son extension longitudinale et a une structure modulaire, que les segments (17-19) se terminent au moins d'un côté par une membrure (24,25 ; 31,32) et que les membrures (24, 45) sont connectables de manière précisément ajustée et de manière à empêcher la torsion à des segments consécutifs (17,19).

2. Traverse selon la revendication 1, **caractérisée en ce que**, dans une section, les points centraux des barreaux en carbone ou tubes en carbone décrivent un polygone régulier.

3. Traverse selon la revendication 2, **caractérisée en ce que** trois tubes en carbone (21-23) ou barreaux en carbone disposés en triangle sont prévus, que deux des barreaux en carbone (21,22) ou tubes en carbone sont disposés dans un plan tourné vers l'objet et s'étendant horizontalement et que le troisième barreau en carbone ou le troisième tube en carbone (23) constitue une pointe détournée de l'objet du triangle ou inversement.

4. Traverse selon une ou plusieurs des revendications précédentes, **caractérisée en ce que** des membrures (24, 36) sont prévues à l'extrémité, que des pièces rapportées (37,38) déborde des membrures (24,36) vers l'extérieur et qu'un câble de serrage (39,40) est en prise sur les pièces rapportées (37,38).

5. Traverse selon une ou plusieurs des revendications précédentes, **caractérisée en ce que** les membrures se succédant (65) sont pourvues respectivement d'une échancrure (66) ouverte en direction de l'objet et que, dans les échancrures (66), est disposé un guide linéaire (67) pour le passage d'un capteur (69) balayant l'objet.

6. Traverse selon une ou plusieurs des revendications précédentes, **caractérisée par** un boîtier (3) dont l'intérieur peut recevoir un gaz de rinçage en surpression.

7. Dispositif de traverses, présentant deux traverses disposées l'une sur l'autre selon une ou plusieurs des revendications précédentes, **caractérisé en ce que** les traverses sont maintenues espacées à leur extrémité respectivement par un élément de connexion en carbone.

8. Dispositif de traverses selon la revendication 7, **caractérisé en ce que** les éléments de connexion sont sertis entre deux couvercles et précontraints au moyen de barres filetées et que les deux barreaux de carbone ou tubes de carbone disposés dans le plan horizontal sont fixés sur les couvercles.
